(19) Europäisches Patentamt / European Patent Office / Office européen des brevets

(11) **EP 2 622 378 B1**

(12) **EUROPEAN PATENT SPECIFICATION**

(45) Date of publication and mention
of the grant of the patent:
**14.11.2018 Bulletin 2018/46**

(51) Int Cl.:
***G01V 1/30*** *(2006.01)*

(21) Application number: **11831117.4**

(22) Date of filing: **19.08.2011**

(86) International application number:
**PCT/US2011/048358**

(87) International publication number:
**WO 2012/047384 (12.04.2012 Gazette 2012/15)**

(54) **HYBRID METHOD FOR FULL WAVEFORM INVERSION USING SIMULTANEOUS AND SEQUENTIAL SOURCE METHOD**

HYBRIDVERFAHREN FÜR FULL-WAVEFORM-INVERSION MITHILFE SIMULTANER UND SEQUENTIELLER QUELLEN

PROCÉDÉ HYBRIDE D'INVERSION DE FORME D'ONDE COMPLÈTE À L'AIDE D'UN PROCÉDÉ DE SOURCE SIMULTANÉE ET SÉQUENTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2010 US 386828 P**

(43) Date of publication of application:
**07.08.2013 Bulletin 2013/32**

(73) Proprietor: **ExxonMobil Upstream Research Company**
**Spring TX 77389 (US)**

(72) Inventors:
• **ROUTH, Partha, S.**
**Katy**
**TX 77494 (US)**
• **KREBS, Jerome, R.**
**Houston**
**TX 77062 (US)**
• **MARCINKOVICH, Carey**
**The Woodlands**
**TX 77381 (US)**
• **LAZARATOS, Spyridon**
**Houston**
**TX 77030 (US)**
• **LEE, Sunwoong**
**Houston**
**TX 77027 (US)**

(74) Representative: **ExxonMobil Chemical Europe Inc.**
**IP Law Europe**
**Hermeslaan 2**
**1831 Machelen (BE)**

(56) References cited:
**WO-A1-2009/117174       US-A1- 2007 274 155**
**US-A1- 2010 018 718       US-A1- 2010 018 718**
**US-A1- 2010 212 909**

• **KREBS J R ET AL: "Fast full-wavefield seismic inversion using encoded sources", GEOPHYSICS, SOCIETY OF EXPLORATION GEOPHYSICISTS, US, vol. 74, no. Suppl. of 6, 1 November 2009 (2009-11-01), pages wcc177-wcc188, XP001550489, ISSN: 0016-8033, DOI: 10.1190/1.3230502**
• **VIRIEUX J ET AL: "An overview of full-waveform inversion in exploration geophysics", GEOPHYSICS, SOCIETY OF EXPLORATION GEOPHYSICISTS, US, vol. 74, no. Suppl. of 6, 1 November 2009 (2009-11-01), pages WCC1-WCC26, XP001550475, ISSN: 0016-8033, DOI: 10.1190/1.3238367**

EP 2 622 378 B1

**Description**

**FIELD OF THE INVENTION**

The invention relates generally to the field of geophysical prospecting, and more particularly to geophysical data processing. Specifically, the invention is a method for inversion of data acquired from multiple geophysical sources such as seismic sources, involving geophysical simulation that computes the data from many simultaneously-active geophysical sources in one execution of the simulation.

**BACKGROUND OF THE INVENTION**

Geophysical inversion [1,2] attempts to find a model of subsurface properties that optimally explains observed data and satisfies geological and geophysical constraints. There are a large number of well known methods of geophysical inversion. These well known methods fall into one of two categories, iterative inversion and non-iterative inversion. The following are definitions of what is commonly meant by each of the two categories:

Non-iterative inversion - inversion that is accomplished by assuming some simple background model and updating the model based on the input data. This method does not use the updated model as input to another step of inversion. For the case of seismic data these methods are commonly referred to as imaging, migration, diffraction tomography or Born inversion.

Iterative inversion - inversion involving repetitious improvement of the subsurface properties model such that a model is found that satisfactorily explains the observed data. If the inversion converges, then the final model will better explain the observed data and will more closely approximate the actual subsurface properties. Iterative inversion usually produces a more accurate model than non-iterative inversion, but is much more expensive to compute.

Iterative inversion is generally preferred over non-iterative inversion, because it yields more accurate subsurface parameter models. Unfortunately, iterative inversion is so computationally expensive that it is impractical to apply it to many problems of interest. This high computational expense is the result of the fact that all inversion techniques require many compute intensive simulations. The compute time of any individual simulation is proportional to the number of sources to be inverted, and typically there are large numbers of sources in geophysical data, where the term *source* as used in the preceding refers to an activation location of a source apparatus. The problem is exacerbated for iterative inversion, because the number of simulations that must be computed is proportional to the number of iterations in the inversion, and the number of iterations required is typically on the order of hundreds to thousands.

The most commonly employed iterative inversion method employed in geophysics is cost function optimization. Cost function optimization involves iterative minimization or maximization of the value, with respect to the model $M$, of a cost function $S(M)$ which is a measure of the misfit between the calculated and observed data (this is also sometimes referred to as the objective function), where the calculated data are simulated with a computer using the current geophysical properties model and the physics governing propagation of the source signal in a medium represented by a given geophysical properties model. The simulation computations may be done by any of several numerical methods including but not limited to finite difference, finite element or ray tracing. The simulation computations can be performed in either the frequency or time domain.

Cost function optimization methods are either local or global [3]. Global methods simply involve computing the cost function $S(M)$ for a population of models $\{M_1, M_2, M_3,...\}$ and selecting a set of one or more models from that population that approximately minimize $S(M)$. If further improvement is desired this new selected set of models can then be used as a basis to generate a new population of models that can be again tested relative to the cost function $S(M)$. For global methods each model in the test population can be considered to be an iteration, or at a higher level each set of populations tested can be considered an iteration. Well known global inversion methods include Monte Carlo, simulated annealing, genetic and evolution algorithms.

Unfortunately global optimization methods typically converge extremely slowly and therefore most geophysical inversions are based on local cost function optimization. Algorithm 1 summarizes local cost function optimization.

    1. selecting a starting model,
    2. computing the gradient of the cost function $S(M)$ with respect to the parameters that describe the model,
    3. searching for an updated model that is a perturbation of the starting model in the negative gradient direction that better explains the observed data.

Algorithm 1 - Algorithm for performing local cost function optimization.

This procedure is iterated by using the new updated model as the starting model for another gradient search. The process continues until an updated model is found that satisfactorily explains the observed data. Commonly used local cost function inversion methods include gradient search, conjugate gradients and Newton's method.

Local cost function optimization of seismic data in the acoustic approximation is a common geophysical inversion task, and is generally illustrative of other types of geophysical inversion. When inverting seismic data in the acoustic approximation the cost function can be written as:

$$S(M) = \sum_{g=1}^{N_g} \sum_{r=1}^{N_r} \sum_{t=1}^{N_t} W\left(\psi_{calc}(M,r,t,w_g) - \psi_{obs}(r,t,w_g)\right) \quad \text{(Eqn. 1)}$$

where:

$S$ = cost function,
$M$ = vector of $N$ parameters, $(m_1, m_2, ...m_N)$ describing the subsurface model,
$g$ = gather index,
$w_g$ = source function for gather g which is a function of spatial coordinates and time, for a point source this is a delta function of the spatial coordinates,
$N_g$ = number of gathers,
$r$ = receiver index within gather,
$N_r$ = number of receivers in a gather,
$t$ = time sample index within a trace,
$N_t$ = number of time samples,
$W$ = minimization criteria function (we usually choose $W(x)=x^2$ which is the least squares (L2) criteria),
$\psi_{calc}$ = calculated seismic pressure data from the model M,
$\psi_{obs}$ = measured seismic pressure data.

The gathers can be any type of gather that can be simulated in one run of a seismic forward modeling program. Usually the gathers correspond to a seismic shot, although the shots can be more general than point sources. For point sources the gather index g corresponds to the location of individual point sources. For plane wave sources g would correspond to different plane wave propagation directions. This generalized source data, $\psi_{obs}$, can either be acquired in the field or can be synthesized from data acquired using point sources. The calculated data $\psi_{calc}$ on the other hand can usually be computed directly by using a generalized source function when forward modeling. For many types of forward modeling, including finite difference modeling, the computation time needed for a generalized source is roughly equal to the computation time needed for a point source.

Equation(1) can be simplified to:

$$S(M) = \sum_{g=1}^{N_g} W\left(\delta(M,w_g)\right) \quad \text{(Eqn. 2)}$$

where the sum over receivers and time samples is now implied and,

$$\delta(M,w_g) = \psi_{calc}(M,w_g) - \psi_{obs}(w_g) \quad \text{(Eqn. 3)}$$

Inversion attempts to update the model $M$ such that $S(M)$ is a minimum. This can be accomplished by local cost function optimization which updates the given model $M^{(k)}$ as follows:

$$M^{(k+1)} = M^{(k)} - \alpha^{(k)} \nabla_M S(M) \quad \text{(Eqn. 4)}$$

where $k$ is the iteration number, $\alpha$ is the scalar size of the model update, and $\nabla_M S(M)$ is the gradient of the misfit function, taken with respect to the model parameters. The model perturbations, or the values by which the model is updated, are calculated by multiplication of the gradient of the objective function with a step length $\alpha$, which must be repeatedly calculated.

From equation (2), the following equation can be derived for the gradient of the cost function:

$$\nabla_M S(M) = \sum_{g=1}^{N_g} \nabla_M W\left(\delta\left(M, w_g\right)\right).$$

(Eqn. 5)

So to compute the gradient of the cost function one must separately compute the gradient of each gather's contribution to the cost function, then sum those contributions. Therefore, the computational effort required for computing $\nabla_M S(M)$ is $N_g$ times the compute effort required to determine the contribution of a single gather to the gradient. For geophysical problems, $N_g$ usually corresponds to the number of geophysical sources and is on the order of 10,000 to 100,000, greatly magnifying the cost of computing $\nabla_M S(M)$.

Note that computation of $\nabla_M W(\delta)$ requires computation of the derivative of $W(\delta)$ with respect to each of the $N$ model parameters $m_i$. Since for geophysical problems $N$ is usually very large (usually more that one million), this computation can be extremely time consuming if it had to be performed for each individual model parameter. Fortunately, the adjoint method can be used to efficiently perform this computation for all model parameters at once [1]. The adjoint method for the least squares objective function and a gridded model parameterization is summarized by the following algorithm:

1. Compute forward simulation of the data using the current model and the gather signature $w_g$ as the source to get $\psi_{calc}(M^{(k)}, w_g)$,

2. Subtract the observed data from the simulated data giving $\delta(M^{(k)}, w_g)$,

3. Compute the reverse simulation (i.e. backwards in time) using $\delta(M^{(k)}, w_g)$ as the source producing $\psi_{adjoint}(M^{(k)}, w_g)$,

4. Compute the integral over time of the product of $\psi_{calc}(M^{(k)}, w_g)$, and $\psi_{adjoint}(M^{(k)}, w_g)$, to get $\nabla_M W(\delta(M, w_g))$.

Algorithm 2 - Algorithm for computing the least-squares cost-function gradient of a gridded model using the adjoint method.

While computation of the gradients using the adjoint method is efficient relative to other methods, it is still very costly. In particular the adjoint methods requires two simulations, one forward in time and one backward in time, and for geophysical problems these simulations are usually very compute intensive. Also, as discussed above, this adjoint method computation must be performed for each measured data gather individually, increasing the compute cost by a factor of $N_g$.

The compute cost of all categories of inversion can be reduced by inverting data from combinations of the sources, rather than inverting the sources individually. This may be called simultaneous source inversion. Several types of source combination are known including: coherently sum closely spaced sources to produce an effective source that produces a wavefront of some desired shape (e.g. a plane wave), sum widely spaces sources, or fully or partially stacking the data before inversion.

The compute cost reduction gained by inverting combined sources is at least partly offset by the fact that inversion of the combined data usually produces a less accurate inverted model. This loss in accuracy is due to the fact that information is lost when the individual sources are summed, and therefore the summed data does not constrain the inverted model as strongly as the unsummed data. This loss of information during summation can be minimized by encoding each shot record before summing. Encoding before combination preserves significantly more information in the simultaneous source data, and therefore better constrains the inversion [4]. Encoding also allows combination of closely spaced sources, thus allowing more sources to be combined for a given computational region. Various encoding schemes can be used with this technique including time shift encoding and random phase encoding. The remainder of this Background section briefly reviews various published geophysical simultaneous source techniques, both encoded and non-encoded.

Van Manen [6] suggests using the seismic interferometry method to speed up forward simulation. Seismic interferometry works by placing sources everywhere on the boundary of the region of interest. These sources are modeled individually and the wavefield at all locations for which a Green's function is desired is recorded. The Green's function between any two recorded locations can then be computed by cross-correlating the traces acquired at the two recorded locations and summing over all the boundary sources. If the data to be inverted have a large number of sources and receivers that are within the region of interest (as opposed to having one or the other on the boundary), then this is a very efficient method for computing the desired Green's functions. However, for the seismic data case it is rare that both the source and receiver for the data to be inverted are within the region of interest. Therefore, this improvement has very limited applicability to the seismic inversion problem.

Berkhout [7] and Zhang [8] suggest that inversion in general can be improved by inverting non-encoded simultaneous sources that are summed coherently to produce some desired wave front within some region of the subsurface. For example, point source data could be summed with time shifts that are a linear function of the source location to produce a down-going plane wave at some particular angle with respect to the surface. This technique could be applied to all categories of inversion. A problem with this method is that coherent summation of the source gathers necessarily reduces the amount of information in the data. So for example, summation to produce a plane wave removes all the information in the seismic data related to travel time versus source-receiver offset. This information is critical for updating the slowly varying background velocity model, and therefore Berkhout's method is not well constrained. To overcome this problem many different coherent sums of the data (e.g. many plane waves with different propagation directions) could be inverted, but then efficiency is lost since the cost of inversion is proportional to the number of different sums inverted. Herein, such coherently summed sources are called generalized sources. Therefore, a generalized source can either be a point source or a sum of point sources that produces a wave front of some desired shape.

Van Riel [9] suggests inversion by non-encoded stacking or partial stacking (with respect to source-receiver offset) of the input seismic data, then defining a cost function with respect to this stacked data which will be optimized. Thus, this publication suggests improving cost function based inversion using non-encoded simultaneous sources. As was true of the Berkhout's [6] simultaneous source inversion method, the stacking suggested by this method reduces the amount of information in the data to be inverted and therefore the inversion is less well constrained than it would have been with the original data.

Mora [10] proposes inverting data that is the sum of widely spaced sources. Thus, this publication suggests improving the efficiency of inversion using non-encoded simultaneous source simulation. Summing widely spaced sources has the advantage of preserving much more information than the coherent sum proposed by Berkhout. However, summation of widely spaced sources implies that the aperture (model region inverted) that must be used in the inversion must be increased to accommodate all the widely spaced sources. Since the compute time is proportional to the area of this aperture, Mora's method preserving much more information than the coherent sum proposed by Berkhout. However, summation of widely spaced sources implies that the aperture (model region inverted) that must be used in the inversion must be increased to accommodate all the widely spaced sources. Since the compute time is proportional to the area of this aperture, Mora's method does not produce as much efficiency gain as could be achieved if the summed sources were near each other.

Ober [11] suggests speeding up seismic migration, a special case of non-iterative inversion, by using simultaneous encoded sources. After testing various coding methods, Ober found that the resulting migrated images had significantly reduced signal-to-noise ratio due to the fact that broad band encoding functions are necessarily only approximately orthogonal. Thus, when summing more than 16 shots, the quality of the inversion was not satisfactory. Since non-iterative inversion is not very costly to begin with, and since high signal-to-noise ratio inversion is desired, this technique is not widely practiced in the geophysical industry.

Ikelle [12] suggests a method for fast forward simulation by simultaneously simulating point sources that are activated (in the simulation) at varying time intervals. A method is also discussed for decoding these time-shifted simultaneous-source simulated data back into the separate simulations that would have been obtained from the individual point sources. These decoded data could then be used as part of any conventional inversion procedure. A problem with Ikelle's method is that the proposed decoding method will produce separated data having noise levels proportional to the difference between data from adjacent sources. This noise will become significant for subsurface models that are not laterally constant, for example from models containing dipping reflectors. Furthermore, this noise will grow in proportion to the number of simultaneous sources. Due to these difficulties, Ikelle's simultaneous source approach may result in unacceptable levels of noise if used in inverting a subsurface that is not laterally constant.

Source encoding proposed by Krebs et al. in PCT Patent Application Publication No. WO 2008/042081, is a very cost effective method to invert full wave field data. (The same approach of simultaneous inversion of an encoded gather will work for receivers, either via source-receiver reciprocity or by encoding the actual receiver locations in common-source gathers of data.) For fixed receivers, the forward and adjoint computations only need to be performed for a single effective source; see PCT Patent Application Publication No. WO 2009/117174. Given the fact that hundreds of shots are recorded for typical 2D acquisition geometries, and thousands in the case of 3D surveys, computational savings from this method are quite significant. In practice, a fixed receiver assumption is not strictly valid for most common field data acquisition geometries. In the case of marine streamer data, both sources and receivers move for every new shot. Even in surveys where the locations of receivers are fixed, the practice often is that not all receivers are "listening" to every shot, and the receivers that are listening can vary from shot-to-shot. This also violates the "fixed-receiver assumption." In addition, due to logistical problems, it is difficult to record data close to the source, and this means that near-offset data are typically missing. This is true for both marine and land surveys. Both of these factors mean that for a simultaneous source gather, every receiver location will be missing data for some source shots. In summary, in simultaneous encoded-source inversion, for a given simultaneous encoded gather, data are required at all receiver locations for every shot, and this may be referred to as the fixed-receiver assumption of simultaneous encoded-source inversion. In WO 08/042081, some of the disclosed embodiments may work better than others when the fixed receiver assumption is not satisfied. Therefore, it would be advantageous to have an accommodation or adjustment to straightforward application of simultaneous encoded sources (and/or receivers) inversion that would enhance its performance when the fixed receiver assumption is compromised. The present invention provides ways of doing this. Haber et al. [15] also describe an approach to the problem of moving receivers in simultaneous encoded source inversion using a stochastic optimization method, and apply it to a direct current resistivity problem.

## SUMMARY OF THE INVENTION

In one embodiment, the invention is a computer-implemented method for full-wavefield inversion of measured geophysical data to determine a physical properties model for a subsurface region, comprising: (a) using a computer to invert a selected shallow time window of arrivals from the measured geophysical data by simultaneous encoded sources and/or receivers inversion to obtain a first physical properties model for the subsurface region; (b) using a computer to invert the measured geophysical data, or a selected deep time window of arrivals from the measured geophysical data, by iterative sequential source inversion, which may use only a sparse sampling of the measured data, to obtain a second physical properties model for the subsurface region, wherein the first physical properties model is used as a starting model and a set of source locations is used to update the second physical properties model in the iterative sequential source inversion; and (c) outputting, displaying, or saving to data storage the second physical properties model of the subsurface region.

In another embodiment, the invention is a computer-implemented method for full-wavefield inversion of measured geophysical data to determine a physical properties model for a subsurface region, comprising: (a) using a computer to invert a selected shallow time window of arrivals from the measured geophysical data by simultaneous encoded sources and/or receivers inversion to obtain a first physical properties model for the subsurface region; (b) using the first physical properties model to simulate, using a computer, synthetic data for longer offsets corresponding to arrivals from deeper then said shallow time window; (c) using a computer to invert the measured geophysical data, wherein the data with longer offsets are augmented, said inversion being simultaneous encoded-sources and/or encoded-receivers inversion, to obtain a second physical properties model of the subsurface region, wherein said augmented data with longer offsets are the sum of the synthetic data for longer offsets and the measured data at the longer offsets; and (d) outputting, displaying, or saving to data storage the second physical properties model of the subsurface region.

## BRIEF DESCRIPTION OF THE DRAWINGS

The present invention and its advantages will be better understood by referring to the following detailed description and the attached drawings in which:

Fig. 1 is a schematic diagram showing the data window that can be used for simultaneous source inversion;

Fig. 2 is a flowchart showing basic steps in one embodiment of the present inventive method, wherein simultaneous source encoding is used in a shallow time window and sparse sequential source inversion is used for deeper windows in Approach I, and in Approach II the Fig. 4 shows two shot gathers of sequential source data computed using the velocity model in

Fig. 3 and encoded using binary encoding described in WO 2008/042081, indicating a shallow time window of 0-3 seconds;

Fig. 5 shows the starting velocity model for the full wavefield inversion in the test example;

Fig. 6 shows the model obtained from simultaneous source inversion by inverting the low frequency data (peak frequency of 7 Hz) from the shallow window (0-3 seconds); as shown in Fig. 4, the fixed receiver assumption is valid for the time window 0-3 seconds;

Fig. 7 shows the model obtained using simultaneous source inversion of low frequency data (peak frequency of 7 Hz) with the data window from 0-4 seconds; since the fixed receiver assumption is no longer valid, artifacts can clearly be seen in the inverted model;

Fig. 8 shows the model obtained using simultaneous source inversion of low frequency data (peak frequency of 7 Hz) with the data window from 0-5 seconds; since the fixed receiver assumption is no longer valid, artifacts can clearly be seen in the inverted model;

Fig. 9 shows the model obtained in the test example by using seqeuntial source inversion of low frequency data (peak frequency of 7 Hz) with the data window from 0-4 seconds using a sparse set of sources with shot separation of 1.2 km; since sequential sources are used, the model does not have any artifacts compared to Fig. 7;

Fig. 10 shows the model obtained in the test example using sequential source inversion of low frequency data (peak frequency of 7 Hz) with the data window from 0-5 seconds using a sparse set of sources with shot separation of 1.2 km; since sequential sources are used, the model does not have any artifacts compared to Fig. 8;

Fig. 11 shows the model obtained in the test example using sequential source inversion of full band frequency data (peak frequency of 40 Hz) with the data window from 0-5 seconds using a sparse set of sources with shot separation of 1.2 km; since sequential sources are used, the model does not have any artifacts compared to Fig. 8;

Fig. 12 shows a near and far-offset limited shot gather computed in the test example using the true model in Fig. 3; the nearest available offset is 200 m and farthest available offset is 5000 m;

Fig. 13 shows the near-offset limited shot gather in Fig. 12 filled with the trace from nearest available offset at x = 200;

Fig. 14 illustrates inversion using the encoded data with near-offset limited shot gathers shown in Fig. 12, the model shown at iteration 5 obtained with simultaneous source inversion with the low frequency data (peak frequency of 7 Hz);

Fig. 15 illustrates inversion using the encoded data with near-offset limited shot gathers shown in Fig. 12, the model shown at iteration 10 obtained with simultaneous source inversion with the low frequency data (peak frequency of 7 Hz); it clearly shows that the model has diverged with significant artifacts;

Fig. 16 illustrates inversion using the encoded data with near-offset filled shot gathers shown in Fig. 13 (since the near-offset filling was approximate the gradient in the water layer is muted to reduce the impact of the approximation on the simultaneous source inversion), the model shown at iteration 5 obtained with simultaneous source inversion with the low frequency data (peak frequency of 7 Hz); and

Fig. 17 illustrates inversion using the encoded data with near-offset filled shot gathers shown in Fig. 13 (since the near-offset filling was approximate the gradient in the water layer is muted to reduce the impact of the approximation on the simultaneous source inversion), the model shown at iteration 200 obtained with simultaneous source inversion with the low frequency data (peak frequency of 7 Hz).

The invention will be described in connection with example embodiments. However, to the extent that the following detailed description is specific to a particular embodiment or a particular use of the invention, this is intended to be illustrative only, and is not to be construed as limiting the scope of the invention. On the contrary, it is intended to cover all alternatives, modifications and equivalents that may be included within the scope of the invention, as defined by the appended claims.

## DETAILED DESCRIPTION OF EXAMPLE EMBODIMENTS

One embodiment of the present invention is a hybrid combination of simultaneous encoded source inversion with traditional sequential source inversion. This embodiment uses simultaneous source encoding for the shallower time-window of the data and uses sparse sequential sources to invert the deeper part of the data. Krebs et al. [5,16] show that the encoded simultaneous source cost function can be computed more efficiently than conventional cost functions while still providing accurate inversions. The simultaneous source cost function is defined here as (compare with equation (2) above):

$$S_{sim}(M) = \sum_{G=1}^{N_G} W\left( \delta\left( M, \sum_{g \in G} c_g \otimes w_g \right) \right) \qquad \text{(Eqn. 6)}$$

where a summation over receivers and time samples is implied as in Eqn. (2), and: $\sum_{g=1}^{N_g} = \sum_{G=1}^{N_G} \sum_{g \in G}$ defines a sum over gathers by sub groups of gathers,

$S_{sim}$ = cost function for simultaneous source data,

$G$ = the groups of simultaneous generalized sources, and

$N_G$ = the number of groups,

$c_g$ = functions of time that are convolved ($\otimes$) with each gather's source signature to encode the gathers, these encoding functions are chosen to be approximately orthogonal with respect to some appropriate operation depending on the weighting function $W$. When $W$ is the L2-Norm the appropriate operation is cross-correlation.

The outer summation in Eqn. (6) is over groups of simultaneous generalized sources corresponding to the gather type (e.g. points sources for common shot gathers). The inner summation, over g, is over the gathers that are grouped for simultaneous computation. For some forward modeling methods, such as finite difference modeling, the computation of the forward model for summed generalized sources (the inner sum over $g \in G$) can be performed in the same amount of time as the computation for a single source. Therefore, as shown in Krebs et. al. [5] $\delta(M,\Sigma c_g \otimes w_g)$ can be computed very efficiently using Algorithm 3.

1. Simulate $\psi_{calc}(M,\Sigma c_g \otimes w_g)$ using a single run of the simulator using $\Sigma c_g \otimes w_g$ as the source,
2. Convolve each measured data gather with the $c_g$ encoding functions, then sum the resulting encoded gathers (i.e. $\Sigma c_g \otimes \psi_{obs}(w_g)$),
3. Subtract the result of step 2 from the result of step 1.

Algorithm 3 - Algorithm for computing the encoded simultaneous-source cost function.

Again as shown in Krebs et al. [5] this algorithm can compute $S_{sim}(M)$ a factor of $N_g/N_G$ times faster than $S(M)$ from Eqn. (2).

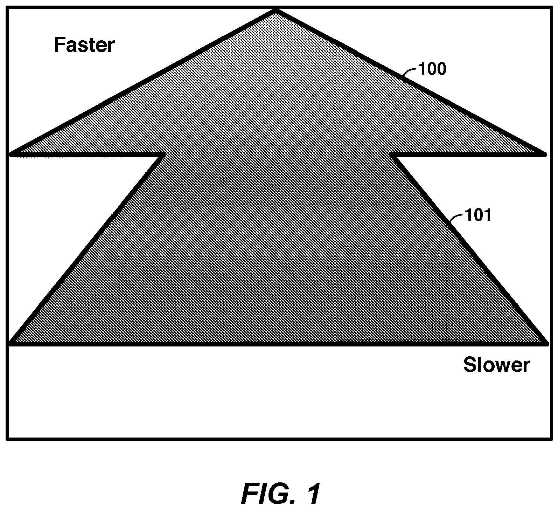

In fixed receiver geometry the shot gathers have complete receiver coverage. For the shallower window this can be achieved if the near offsets can be populated. The shallower windows are defined as corresponding to times smaller than the arrival times for the faster modes at the longest offsets. The size of the shallow window, over which the encoded simultaneous source approach is applicable, depends on the near-surface velocity and the maximum available offsets. Figure 1 is a schematic diagram showing the data window that can be used for simultaneous source inversion. The lines with smaller slopes define the bottom of the window for a faster shallow-velocity case (100). The lines with larger slopes define the bottom of the window for a slower shallow-velocity case (101). The vertical axis is time and the horizontal axis is source-receiver offset, with zero offset for the selected receiver being in the middle of the diagram, with positive offsets to the right and negative offsets to the left. The schematic shown in Fig. 1 suggests that for slow near-surface velocities the usable window (101) is longer compared to the case when the near-surface velocities are faster (100).

The negative offsets in the shot gathers may be filled using reciprocity (201). The missing near-offsets may be filled with estimated values, for example from neighboring traces (201). Filling the near-offsets in the shallow window will provide complete receiver coverage to use simultaneous source encoding. Another alternative is to simply eliminate all receivers that were a near offset for some shot. There are various prior approaches to fill in the near-offset data such as reconstruction methods typically used in surface-related multiple attenuation. This makes the shallow windowed shot gathers (202) conform to the fixed-receiver assumption preferable for simultaneous source encoding (203). Therefore, for the shallow window, one can generate simultaneous-source encoded data (204) and invert (205) for a subsurface model (206) that fits these data. Since the computation time is significantly less by several orders of magnitude, a more sophisticated simulation algorithm (e.g. elastic full wavefield inversion) can potentially be used if necessary. Following the simultaneous source inversion with the shallow windowed data, the next step is use the shallow model as a starting model (207) to invert the deeper window data (208) since the fixed receiver assumption breaks down for deeper windows.

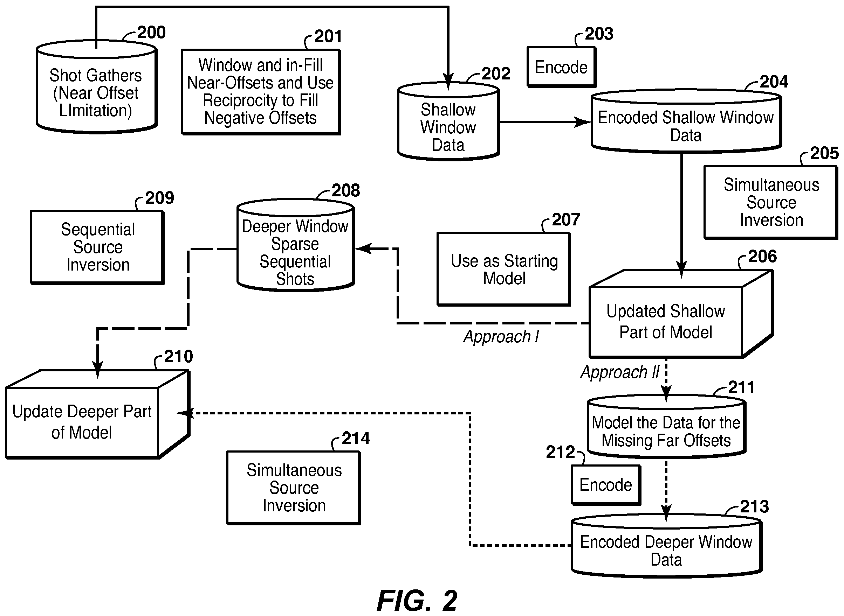

The present inventive method includes two embodiments for inverting the deeper window data. A flowchart of these hybrid approaches is presented in Fig. 2. In the first approach shown in Fig. 2, traditional sequential-shot techniques are used to invert (209) the deeper window data (208). However, a sparser set of sources is sufficient to update the deeper part of the model (210) and may therefore be used to advantage. How many sources are required will depend on the spatial wavelength of the model and the maximum available offsets. From a physics point of view, the resolution of the subsurface degrades with depth. For example, in offset-limited data the contribution in the deeper window is dominantly from reflections rather than transmission. Thus, depending on the desired scale length of the model that needs to be updated, the choice of how many sequential sources are necessary can be problem-dependent. For example, if the goal is just to obtain a smooth velocity model that better explains the kinematics (event traveltimes), then the user of the invention can choose a sparse set of sources for inversion. If the goal is to obtain a high resolution target-oriented model update, then the user can include more sources above the target region and sparse sources everywhere else.

In the second approach (Approach II in Fig. 2), advantage is made of the fact that the shallow model (206) resulting from the shallow window inversion should be satisfactory for predicting long offset data (211) at times larger than the shallow window. Therefore, the shallow model obtained from simultaneous inversion is used to compute the data at the larger missing offsets(211). The advantage of this approach is that with the available far-offset traces obtained using forward modeling, the fixed receiver assumption can be applied. Thus with the available data along with the computed far offsets, the shot gathers can be encoded (212) for deeper window (213) inversion (214), as indicated in Fig. 2.

The present invention's hybrid approach is not only applicable to streamer data, but also to a variety of other acquisition geometries where the fixed-receiver assumption breaks down. For example, ocean bottom cable (OBC) acquisitions are typically patch-based (fixed receivers for a subset of shots), and they do not conform to the idealized situation where all receivers are fixed and recording for all shots. Similarly for land acquisitions due to logistical problems the fixed receiver geometry is difficult to achieve.

Many types of encoding functions $c_g$ can be used in equation (6) including but not limited to:

- Linear, random, chirp and modified-chirp frequency-dependent phase encoding as presented in Romero et al. [13];

- The frequency independent phase encoding as presented in Jing et al. [14];

- Random time shift encoding;

- Frequency division multiplexing (FDMA), time division multiplexing (TDMA) and code division multiplexing (CDMA) used in telecommunications.

Some of these encoding techniques will work better than others depending upon the application, and some can be combined. In particular, good results have been obtained using frequency dependent random phase encoding and also by combining frequency independent encoding of nearby sources with frequency dependent random phase encoding for more widely separated sources. An indication of the relative merits of different encodings can be obtained by running test inversions with each set of encoding functions to determine which converges faster.

It should be noted that the simultaneous encoded-source technique can be used for many types of inversion cost function. In particular it could be used for cost functions based on other norms than L2 discussed above. It could also be used on more sophisticated cost functions than the one presented in Equation 2, including regularized cost functions. Finally, the simultaneous encoded-source method could be used with any type of global or local cost function inversion method including Monte *Carlo*, simulated *annealing*, *genetic* algorithm, evolution algorithm, gradient line search, conjugate gradients and Newton's method.

The present inventive method can also be used in conjunction with various types of generalized source techniques, such as those suggested by Berkhout [7]. In this case, rather than encoding different point source gather signatures, one would encode the signatures for different synthesized plane waves.

Some variations on the embodiment described above include:

- The $c_g$ encoding functions can be changed for each iteration of the inversion. In at least some instances this leads to faster convergence of the inversion.

- In some cases (e.g., when the source sampling is denser than the receiver sampling) it may be advantageous to use reciprocity to treat the actual receivers as computational sources, and encode the receivers instead of the sources.

- This invention is not limited to single-component point receivers. For example, the receivers could be receiver arrays or they could be multicomponent receivers.

- The method may be improved by optimizing the encoding to yield the highest quality inversion. For example the encoding functions could be optimized to reduce the number of local minima in the cost function. The encoding functions could be optimized either by manual inspection of tests performed using different encoding functions or using an automated optimization procedure.

- Acquisition of simultaneous encoded-source data could result in significant geophysical data acquisition cost savings.

- For marine seismic data surveys, it would be very efficient to acquire encoded source data from multiple simultaneously operating marine vibrators that operate continuously while in motion.

- As indicated above, the encoding process in the present invention may be performed in the field acquisition of the data, for example where the pilot signals of multiple simultaneously operating vibrators are encoded with different encoding functions. In the attached claims, steps referring to encoding geophysical data, or to geophysical data from encoded sources, or to obtaining encoded gathers of geophysical data will be understood to include obtaining data already encoded in the field acquisition process, except where the context clearly indicates that encoding is occurring in a data processing step.

- Other definitions for the cost function may be used, including the use of a different norm (e.g. L1 norm (absolute value) instead of L2 norm), and additional terms to regularize and stabilize the inversion (e.g. terms that would penalize models that aren't smooth or models that are not sparse).

## *Example*

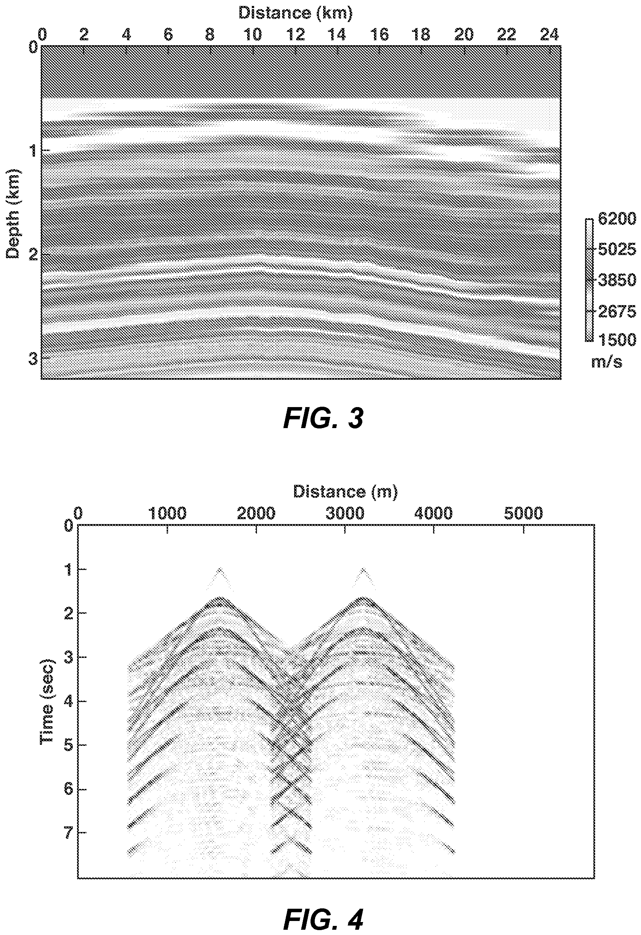

Figures 3-11 present a synthetic example of inverting constant-density acoustic seismic data using the hybrid approach of this invention when the fixed receiver assumption is violated. The results are compared with the simultaneous source inversion where the fixed receiver assumption is valid.

Figure 3 is the true velocity model, i.e. the velocity model that will be used to generate synthetic data. The model has 500 m of water depth and the reservoir is depth of 3 km.

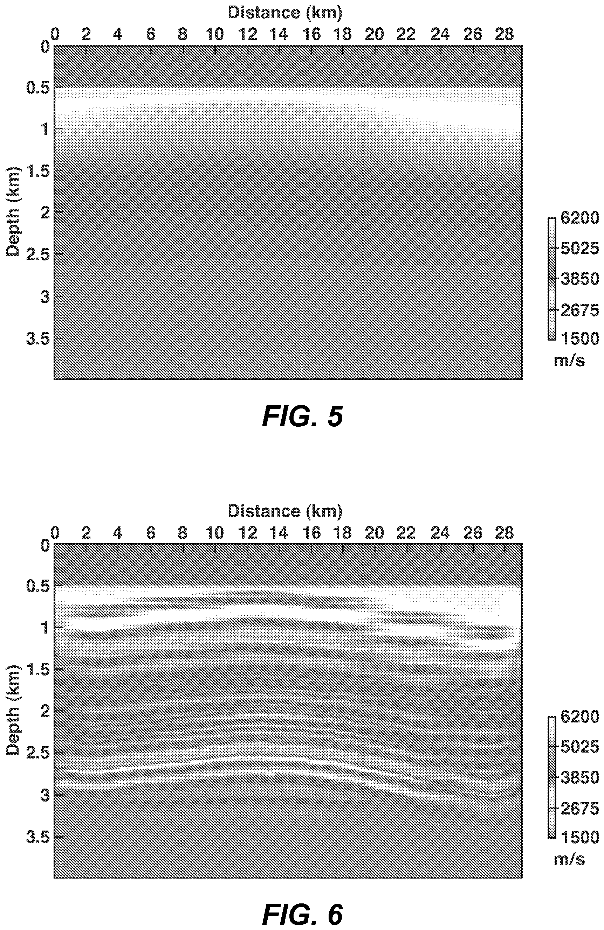

Figure 4 shows an example of two far-offset limited representative shot gathers encoded using binary encoding described in PCT Patent Application Publication No. WO 2008/042081. The offset-limited nature of the shot gathers that is evident from the figure makes the fixed-receiver assumption invalid. However, it can also be seen that the fixed-receiver assumption *is* valid for the shallow time window from 0 to about 3 seconds. Figure 4 shows that the receivers for the left shot between x = 800 and x = 2000 do not have any contribution from the right shot, i.e. energy from the right shot does not reach those receivers before 3 seconds. Similarly the receivers for the right shot between x = 2800 and x = 4200 do not have any contribution from left shot in the shallow time window between 0 and 3 seconds. The maximum far-offset used in this example is 5 km. The data are generated using 80 m shot spacing and receiver separation is 10 m. This example uses near-offset data computed using the model. To generate the starting velocity model for inversion, the common depth point (CDP) gathers are generated with the 5-km offset-limited sequential shots, and Kirchoff depth migration is used to flatten the common image gathers. The starting velocity model shown in Fig. 5 is obtained using Kirchoff depth migration. Since the depth migration fits the kinematic part of the data, the starting model is a smooth model.

The starting model in Fig. 5 is used next to invert encoded data using simultaneous source inversion. Since full wavefield inversion is highly nonlinear problem, time-frequency windowing is typically necessary to make the problem well-posed for stable convergence to the desired solution.

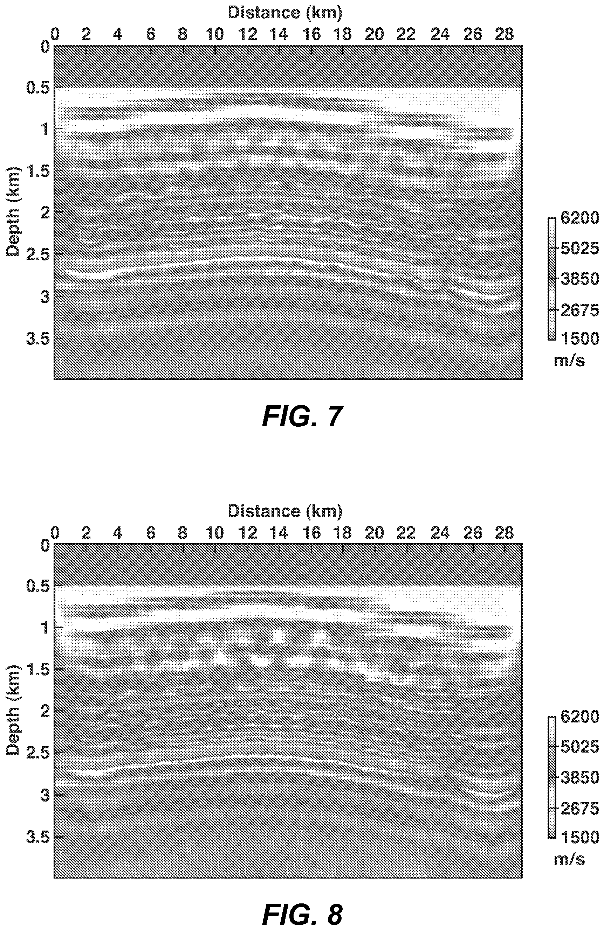

Figure 6 shows the model obtained by inverting the low frequency data (with peak frequency of 7 Hz). Since the fixed receiver assumption is not violated up to 3 seconds of the data (shown in Figure 4), the recovered model achieved stable convergence with simultaneous source inversion. For the time windowed data up to 3 s, the maximum offset is about 5 km. Thus the inversion recovers the shallower part of the model well compared to the deeper part. Figures 7 and 8 show the result of inverting the data with time window of 4 s and 5 s, respectively. It is clear from the results that the inverted model has artifacts since the encoded data in these time windows do not have the large offset data and as a result the incorrect gradient is computed for model updating. Because the fixed receiver assumption is violated in these time windows, the simultaneous source inversion produces artifacts in the model.

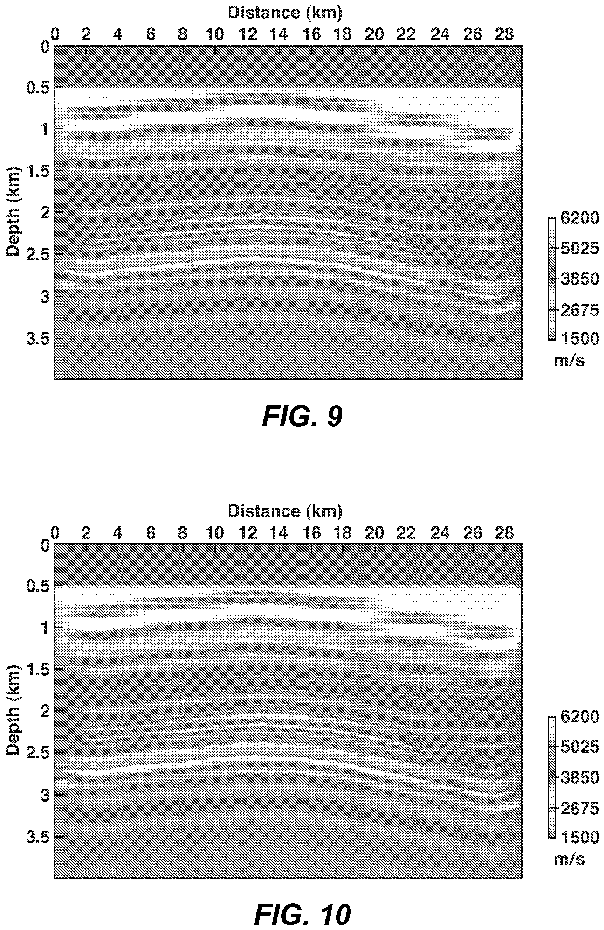

The model obtained from shallow window simultaneous source inversion (Fig. 5) is used as the starting model for the sequential source inversion for the deeper time window 4s. A sparse set of sources (20 sources out of 383 sources used for encoding the data) is used for the 4 s window inversion. The resulting model is shown in Fig. 9. Using the model from Fig. 9 as starting model, the 5 s windowed data are inverted. For the 5 s data inversion, only 10 sequential sources are used. The resulting model is shown in Fig. 10. For offset-limited data, the aperture becomes limited with depth, hence a sparse set of sources are sufficient to obtain a reasonable model. Using sparse sources provides a significant decrease in the computational effort.

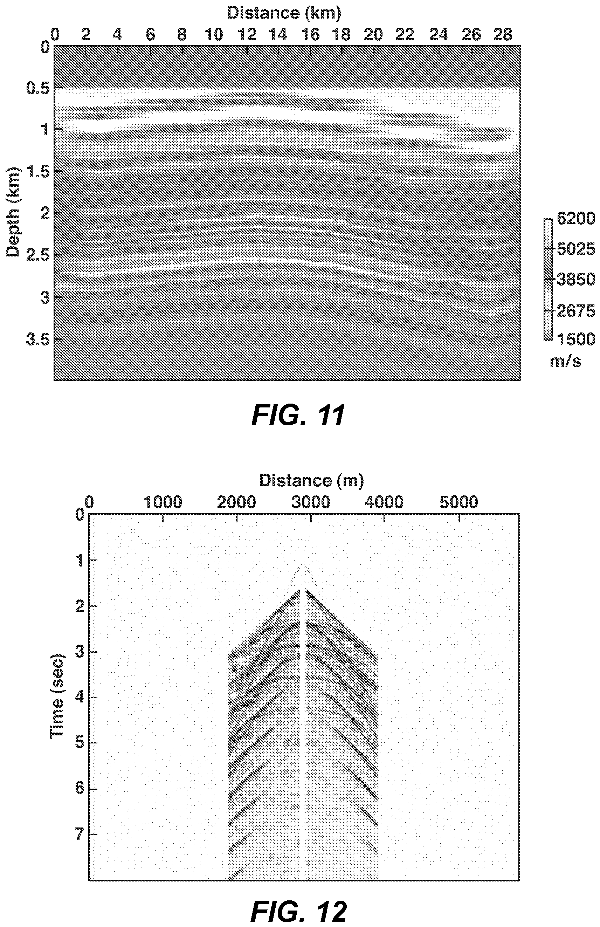

Figure 11 shows the result of inverting the 5 s data window with full band data (peak frequency of 40Hz) with 10 sequential sources.

In the example presented above, the measured near-offset data were used. In practice, the marine streamer data typically have missing near-offsets. In the next example, offset data up to 200 m are eliminated. The goal here is to show the impact of the missing near offsets in the simultaneous inversion and its importance to be included in the encoded data.

Figure 12 shows a representative shot gather with missing offsets that are encoded for simultaneous inversion.

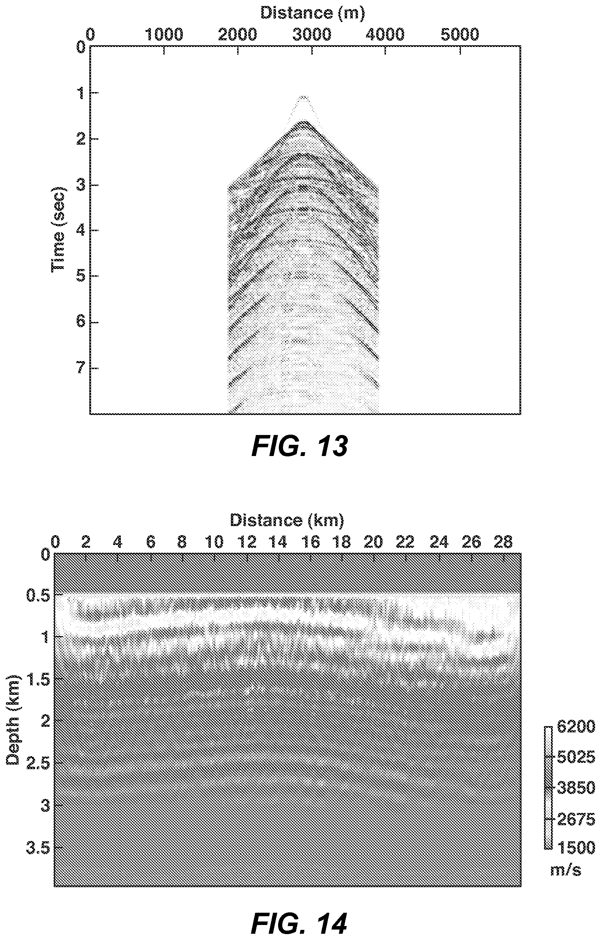

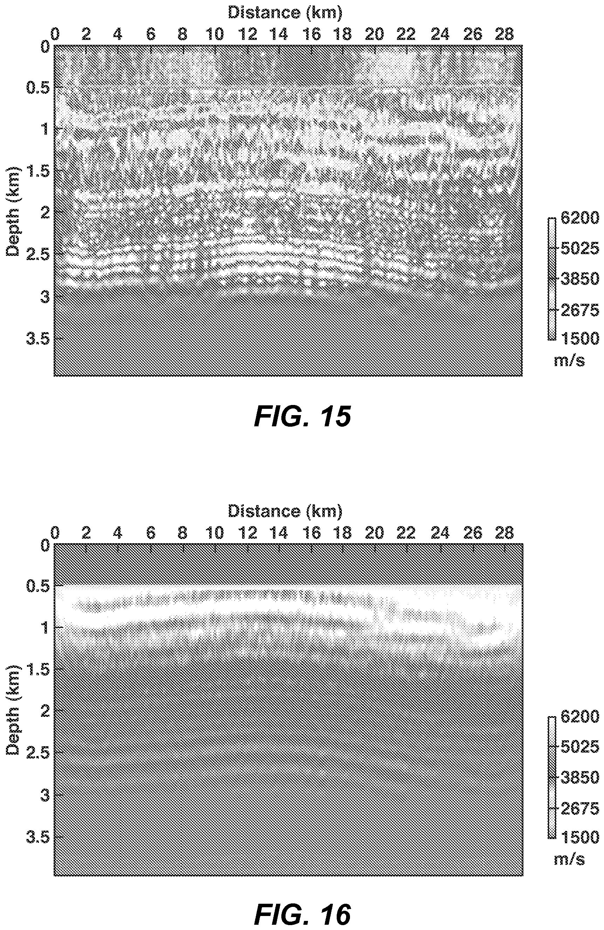

Since there is missing near-offset information in the encoded data, the simultaneous inversion not only produces artifacts in the recovered model, but it is also difficult to fit the data. The recovered model at iteration 5 and 50 is shown in Figs. 14 and 15, respectively. The inverted model has significant artifacts and the solution has completely diverged for the low frequency data inversion. Figure 15 shows that due to missing near-offset information in the encoded data, there are large velocity artifacts in the water layer. To improve the solution, data interpolation or regularization can be used to fill in the near-offset traces. This is a common procedure for preparing data for multiple elimination problems. Another factor that leads to the artifacts in the inversion is the missing large energy data due to direct arrivals. Typically the near-offset data with direct arrivals have significant energy, therefore from a data fitting point of view it has large contribution to the data misfit. The missing information in the measured encoded data exacerbates the problem and causes the inversion to diverge, resulting in significant artifacts. Recognizing this aspect of data fitting, the problem can be circumvented to an extent by masking or muting the gradient in the shallow part of the model that is commonly associated with water velocity. This is demonstrated in the next example.

Instead of interpolating the near-offsets traces that is a common procedure for multiple-elimination, the nearest available trace at 200 m is used and multiple copies are made to populate the missing near-offset traces, with this trace shown in Fig. 13. The data are then encoded using binary encoding for simultaneous inversion. During the simultaneous inversion of the low frequency encoded data for the shallow 3 s time windowed data, the gradient in the water layer is muted so that the error accumulated in the water layer does not propagate for the model updating in the deeper part and cause the inversion to diverge.

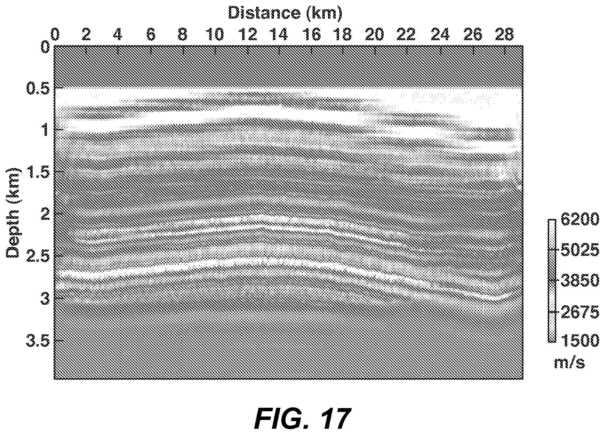

Figures 16 and 17 show the inversion result for iteration 5 and 200, respectively, using simultaneous source inversion of the low frequency data with gradient muting in the water layer. Figure 17 clearly shows that the inversion is stable and the recovered model is similar to the inversion in Figure 5. The results should further improve if the near-offsets are interpolated using data regularization methods such as radon interpolation. All of the examples presented demonstrate the approach "I" described in Figure 2.

The foregoing application is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims. Persons skilled in the art will readily recognize that in preferred embodiments of the invention, at least some of the steps in the present inventive method are performed on a computer, i.e. the invention is computer implemented. In such cases, the resulting updated physical properties model may either be downloaded, displayed, or saved to computer storage.

### References

1. Tarantola, A., "Inversion of seismic reflection data in the acoustic approximation," Geophysics 49, 1259-1266 (1984).

2. Sirgue, L., and Pratt G. "Efficient waveform inversion and imaging: A strategy for selecting temporal frequencies," Geophysics 69, 231-248 (2004).

3. Fallat, M. R., Dosso, S. E., "Geoacoustic inversion via local, global, and hybrid algorithms," Journal of the Acoustical Society of America 105, 3219-3230 (1999).

4. Hinkley, D. and Krebs, J., "Gradient computation for simultaneous source inversion," PCT Patent Application Publication No. WO 2009/117174.

5. Krebs, J. R., Anderson, J. A., Neelamani, R., Hinkley, D., Jing, C., Dickens, T., Krohn, C., Traynin, P., "Iterative inversion of data from simultaneous geophysical sources," PCT Patent Application Publication No. WO 2008/042081.

6. Van Manen, D. J., Robertsson, J.O.A., Curtis, A., "Making wave by time reversal," SEG International Exposition and 75th Annual Meeting Expanded Abstracts, 1763-1766 (2005).

7. Berkhout, A. J., "Areal shot record technology," Journal of Seismic Exploration 1, 251-264 (1992).

8. Zhang, Y., Sun, J., Notfors, C., Gray, S. H., Cherris, L., Young, J., "Delayed-shot 3D depth migration," Geophysics 70, E21-E28 (2005).

9. Van Riel, P., and Hendrik, W. J. D., "Method of estimating elastic and compositional parameters from seismic and echo-acoustic data," U.S. Patent No. 6,876,928 (2005).

10. Mora, P., "Nonlinear two-dimensional elastic inversion of multi-offset seismic data," Geophysics 52, 1211-1228 (1987).

11. Ober, C. C., Romero, L. A., Ghiglia, D. C., "Method of Migrating Seismic Records," U.S. Patent No. 6,021,094 (2000).

12. Ikelle, L. T., "Multi-shooting approach to seismic modeling and acquisition," U.S. Patent No. 6,327,537 (2001).

13. Romero, L. A., Ghiglia, D. C., Ober, C. C., Morton, S. A., "Phase encoding of shot records in prestack migration," Geophysics 65, 426-436 (2000).

14. Jing X., Finn, C. J., Dickens, T. A., Willen, D. E., "Encoding multiple shot gathers in prestack migration," SEG International Exposition and 70th Annual Meeting Expanded Abstracts, 786-789 (2000).

15. Haber, E., Chung M. and Herrmann, "An effective method for parameter estimation with PDE constraints with multiple right hand sides," Preprint - UBC http://www.math.ubc.ca/~haber/pubs/PdeOptStochV5.pdf (2010).

16. Jerome R. Krebs, John E. Anderson, David Hinkley, Ramesh Neelamani, Sunwoong Lee, Anatoly Baumstein, and Martin-Daniel Lacasse, "Full-wavefield seismic inversion using encoded sources," Geophysics 74-6, WCC177-WCC188 (2009).

## Claims

1. A computer-implemented method for full-wavefield inversion of measured geophysical data (200) to determine a physical properties model for a subsurface region, comprising:

   using a computer to invert (205) a selected shallow time window of arrivals from the measured geophysical data (202) by simultaneous encoded (203) sources and/or receivers inversion to obtain a first physical properties model (206) for the subsurface region;
   using a computer to invert (209) the measured geophysical data, or a selected deep time window of arrivals from the measured geophysical data (208), by iterative sequential source inversion to obtain a second physical properties model (210) for the subsurface region, wherein the first physical properties model is used as a starting model (207) and a set of source locations is used to update the second physical properties model in the iterative sequential source inversion; and
   outputting, displaying, or saving to data storage the second physical properties model of the subsurface region.

2. A computer-implemented method for full-wavefield inversion of measured geophysical data (200) to determine a physical properties model for a subsurface region, comprising:

   Using a computer to invert (205) a selected shallow time window of arrivals from the measured geophysical data (202) by simultaneous encoded (203) sources and/or receivers inversion to obtain a first physical properties model (206) for the subsurface region;
   using the first physical properties model to simulate, using a computer, synthetic data for longer offsets corresponding to arrivals from deeper then said shallow time window (211);
   using a computer to invert (214) the measured geophysical data, wherein the data with longer offsets are augmented, said inversion being simultaneous encoded-sources and/or encoded-receivers inversion (213), to obtain a second physical properties model (210) of the subsurface region, wherein said augmented data with longer offsets are the sum of the synthetic data for longer offsets and the measured data at the longer offsets; and
   outputting, displaying, or saving to data storage the second physical properties model of the subsurface region.

3. The method of claim 1, wherein the shallow time window consists of arrival times smaller than arrival times for fastest propagation modes at longest offsets, wherein offset is source-receiver spacing.

4. The method of claim 1, wherein how many source locations are used to update the second physical properties model in the iterative sequential source inversion is determined based at least in part on spatial wavelength of the second physical properties model and maximum available offsets in the measured geophysical data.

5. The method of claim 1, wherein the set of source locations used to update the second physical properties model in the iterative sequential source inversion consists of fewer source locations then are represented in the measured geophysical data or are used in the simultaneous encoded sources and/or receivers inversion.

6. The method of claim 1, wherein:

missing data for negative offsets in the selected shallow time window of arrivals are filled from positive offset data using source-receiver reciprocity; and
missing near-offset data in the selected shallow time window of arrivals are provided with estimated values, or, alternatively, receivers that were a near offset for some source shot are not considered in the method.

7. The method of claim 1 or 2, wherein the measured geophysical data were acquired in a survey using non-stationary receivers.

8. The method of claim 1, further comprising using iterative inversion in the simultaneous encoded sources and/or receivers inversion, wherein the sources and or receivers are encoded using a selected set of encoding functions, and wherein a different set of encoding functions is selected for at least one of the iterations.

9. The method of claim 2, wherein:

all simultaneous encoded source inversions are iterative,
the sources are encoded using a selected set of encoding functions, and
a different set of encoding functions is selected for at least one of the iterations.

10. The method of claim 1, wherein the measured geophysical data are seismic data.

11. The method of claim 1, wherein the simultaneous encoded sources and/or receivers inversion comprises:

(a) obtaining a group of two or more encoded gathers of the measured geophysical data for the shallow time window, wherein each gather is associated with a single generalized source or with a single receiver, and wherein each gather is encoded with a different encoding signature selected from a set of non-equivalent encoding signatures;
(b) summing the encoded gathers in the group by summing all data records in each gather that correspond to a single receiver, or to a single source if receiver gathers are used, and repeating for each different receiver or source, resulting in a simultaneous encoded gather;
(c) assuming a physical properties model of the subsurface region, said assumed model providing values of at least one physical property at locations in the subsurface region;
(d) calculating an update to the assumed physical properties model that is more consistent with the simultaneous encoded gather from step (b), said calculation involving one or more encoded simultaneous source forward or reverse simulation operations that use the assumed physical properties model and encoded source signatures using the same encoding functions used to encode corresponding gathers of measured data, wherein an entire simultaneous encoded gather is simulated in a single simulation operation;
(e) repeating step (d) at least one more iteration, using the updated physical properties model from the previous iteration of step (d) as the assumed model to produce a further updated physical properties model of the subsurface region that is more consistent with a corresponding simultaneous encoded gather of measured data, using the same encoding signatures for source signatures in the simulation as were used in forming the corresponding simultaneous encoded gather of measured data; and
(f) taking the further updated physical properties model for the first physical properties model.

12. The method of claim 1, wherein the simultaneous encoded sources and/or receivers inversion comprises:

(a) obtaining a group of two or more encoded gathers of the measured geophysical data from the shallow time window, wherein each gather is associated with a single generalized source or with a single receiver, and wherein each gather is encoded with a different encoding function selected from a set of non-equivalent encoding functions;

(b) summing the encoded gathers in the group by summing all data records in each gather that correspond to a single receiver, or to a single source if receiver gathers are used, and repeating for each different receiver or source, resulting in a simultaneous encoded gather;

(c) assuming a physical properties model of the subsurface region, said model providing values of at least one physical property at locations in the subsurface region;

(d) inverting the group of two or more encoded gathers, one encoded gather at a time, all data traces in each encoded gathered being inverted simultaneously, using the assumed physical properties model as an initial model and iteratively updating said model to minimize a cost function measuring degree of misfit between model-simulated data and the measured geophysical data in the encoded gathers to generate an updated physical properties model, wherein model adjustments are made using a gradient of the cost function with respect to at least one model parameter, which gradient is computed from a time integration of a product of encoded simultaneous-source data simulated forward in time and encoded simultaneous-source data simulated backward in time; and

(e) taking the updated physical properties model as the first physical properties model.

13. The method of claim 11, further comprising obtaining at least one additional group of two or more encoded gathers of the measured geophysical data as in step (a), and performing step (b) for each additional group, then accumulating the corresponding updates to the physical properties model from step (d), wherein the updated physical properties model to be used in step (e) is based on the accumulated updates.

14. The method of claim 11 or 12, wherein said encoded gathers of measured data are encoded by temporally convolving all traces from a gather with the encoding signature selected for the gather.

15. The method of claim 11 or 12, wherein the two or more encoded gathers of measured data are obtained by obtaining gathers of data from a geophysical survey in which data are acquired from a plurality of simultaneously operating, uniquely encoded source devices.

16. A computer program product, comprising a non-transitory computer usable medium having a computer readable program code embodied therein, said computer readable program code adapted to be executed to implement a method for full-wavefield inversion of measured geophysical data to determine a physical properties model for a subsurface region, said method comprising:

inverting a selected shallow time window of arrivals from the measured geophysical data by simultaneous encoded sources and/or receivers inversion to obtain a first physical properties model for the subsurface region;

inverting the measured geophysical data, or a selected deep time window of arrivals from the measured geophysical data, by iterative sequential source inversion to obtain a second physical properties model for the subsurface region, wherein the first physical properties model is used as a starting model and a set of source locations is used to update the second physical properties model in the iterative sequential source inversion; and

outputting, displaying, or saving to data storage the second physical properties model of the subsurface region.

17. A computer program product, comprising a non-transitory computer usable medium having a computer readable program code embodied therein, said computer readable program code adapted to be executed to implement a method for full-wavefield inversion of measured geophysical data to determine a physical properties model for a subsurface region, said method comprising:

inverting a selected shallow time window of arrivals from the measured geophysical data by simultaneous encoded sources and/or receivers inversion to obtain a first physical properties model for the subsurface region;

using the first physical properties model to simulate synthetic data for longer offsets corresponding to arrivals from deeper then said shallow time window;

inverting the measured geophysical data, wherein the data with longer offsets are augmented, said inversion being simultaneous encoded-sources and/or encoded-receivers inversion, to obtain a second physical properties model of the subsurface region, wherein said augmented data with longer offsets are the sum of the synthetic data for longer offsets and the measured data at the longer offsets; and

outputting, displaying, or saving to data storage the second physical properties model of the subsurface region.

18. A method for producing hydrocarbons from a subsurface region, comprising:

performing a geophysical survey of the subsurface region resulting in measured geophysical data;

processing the measured geophysical data on a computer by a method of claim 1 or claim 2 to generate a physical properties model of the subsurface region;
assessing hydrocarbon potential of the subsurface region using the physical properties model; and
drilling a well into the subsurface region based at least in part on the assessment of hydrocarbon potential, and producing hydrocarbons from the well.

**Patentansprüche**

1. Computerimplementiertes Verfahren zur Full-Wavefield-Inversion gemessener geophysikalischer Daten (200), um ein physikalisches Eigenschaftenmodell für eine unterirdische Region zu ermitteln, bei dem
ein Computer zum Invertieren (205) eines ausgewählten flachen Zeitfensters der Eingänge aus den gemessenen geophysikalischen Daten (202) durch Inversion von simultanen kodierten (203) Quellen und/oder Empfängern verwendet wird, um ein erstes physikalisches Eigenschaftenmodell (206) für die unterirdische Region zu erhalten;
ein Computer zum Invertieren (209) der gemessenen geophysikalischen Daten oder eines ausgewählten tiefen Zeitfensters der Eingänge aus den gemessenen geophysikalischen Daten (208) durch iterative sequentielle Quelleninversion verwendet wird, um ein zweites physikalisches Eigenschaftenmodell (210) für die unterirdische Region zu erhalten, wobei das erste physikalische Eigenschaftenmodell als Startmodell (207) verwendet wird und ein Satz von Quellstandorten verwendet wird, um das zweite physikalische Eigenschaftenmodell in der iterativen sequentiellen Quelleninversion zu aktualisieren; und
das zweite physikalische Eigenschaftenmodell der unterirdischen Region ausgegeben, angezeigt oder im Datenspeicher gespeichert wird.

2. Computerimplementiertes Verfahren zur Full-Wavefield-Inversion gemessener geophysikalischer Daten (200), um ein physiklisches Eigenschaftenmodell für eine unterirdische Region zu ermitteln, bei dem
ein Computer zum Invertieren (205) eines ausgewählten flachen Zeitfensters der Eingänge aus den gemessenen geophysikalischen Daten (202) durch Inversion von simultanen kodierten (203) Quellen und/oder Empfängern verwendet wird, um ein erstes physikalisches Eigenschaftenmodell (206) für die unterirdische Region zu erhalten;
das erste physikalische Eigenschaftenmodell verwendet wird, um unter Verwendung eines Computers synthetische Daten für längere Versätze zu simulieren, die Eingängen aus tieferem als dem flachen Zeitfenster (211) entsprechen;
ein Computer verwendet wird, um die gemessenen geophysikalischen Daten zu invertieren (214), wobei die Daten mit längeren Versätzen erweitert werden, wobei die Inversion Inversion mit simultanen kodierten Quellen und/oder kodierten Empfängern (213) ist, um ein zweites physikalisches Eigenschaftenmodell (210) der unterirdischen Region zu erhalten, wobei die erweiterten Daten mit längeren Versätzen die Summe der synthetischen Daten für längere Versätze und der gemessenen Daten bei den längeren Versätzen sind; und das zweite physikalische Eigenschaftenmodell der unterirdischen Region ausgegeben, angezeigt oder im Datenspeicher gespeichert wird.

3. Verfahren nach Anspruch 1, bei dem das flache Zeitfenster aus Eingangszeiten kleiner als Eingangszeiten der schnellsten Ausbreitungsmodi bei den längsten Versätzen ist, wobei der Versatz der Abstand zwischen Quelle und Empfänger ist.

4. Verfahren nach Anspruch 1, bei dem mindestens teilweise basierend auf räumlicher Wellenlänge des zweiten physikalischen Eigenschaftenmodells und maximal verfügbaren Versätzen in den gemessenen geophysikalischen Daten ermittelt wird, wie viele Quellstandorte zum Aktualisieren des zweiten physikalischen Eigenschaftenmodells in der iterativen sequentiellen Quelleninversion verwendet werden.

5. Verfahren nach Anspruch 1, bei dem der Satz der Quellstandorte, der zum Aktualisieren des zweiten physikalischen Eigenschaftenmodells in der iterativen sequentiellen Quelleninversion verwendet wird, aus weniger Quellstandorten besteht, als in den gemessenen geophysikalischen Daten repräsentiert werden oder in der Inversion von simultanen kodierten Quellen und/oder Empfängern verwendet werden.

6. Verfahren nach Anspruch 1, bei dem
fehlende Daten für negative Versätze in dem ausgewählten flachen Zeitfenster der Eingänge aus positiven Versatzdaten unter Verwendung von Quelle-Empfänger-Reziprozität aufgefüllt werden; und
fehlende nahe dem Versatz liegende Daten in dem ausgewählten flachen Zeitfenster der Eingänge als geschätzte Werte bereitgestellt werden, oder alternativ durch Empfänger, die für eine beliebige seismische Quellsprengung nahe dem Versatz waren und in dem Verfahren nicht berücksichtigt wurden.

**7.** Verfahren nach Anspruch 1 oder 2, bei dem die gemessenen geophysikalischen Daten in einer Vermessung unter Verwendung von nicht-stationären Empfängern erfasst wurden.

**8.** Verfahren nach Anspruch 1, das ferner die Verwendung von iterativer Inversion in der Inversion von simultanen kodierten Quellen und/oder Empfängern umfasst, wobei die Quellen und/oder Empfänger unter Verwendung eines ausgewählten Satzes von Kodierfunktionen kodiert werden, und wobei für mindestens eine der Iterationen ein anderer Satz von Kodierfunktionen ausgewählt wird.

**9.** Verfahren nach Anspruch 2, bei dem
alle simultanen kodierten Inversionen der Quelle iterativ sind,
die Quellen unter Verwendung eines ausgewählten Satzes von Kodierfunktionen kodiert werden, und
für mindestens eine der Iterationen ein anderer Satz von Kodierfunktionen ausgewählt wird.

**10.** Verfahren nach Anspruch 1, bei dem die gemessenen geophysikalischen Daten seismische Daten sind.

**11.** Verfahren nach Anspruch 1, bei dem die Inversion der simultanen kodierten Quellen und/oder Empfänger umfasst, dass:

(a) eine Gruppe von zwei oder mehr kodierten Sammlungen der gemessenen geophysikalischen Daten für das flache Zeitfenster erhalten wird, wobei jede Sammlung einer einzelnen generalisierten Quelle oder einem einzelnen Empfänger zugeordnet ist, und wobei jede Sammlung mit einer unterschiedlichen Kodiersignatur kodiert ist, die aus einem Satz nichtäquivalenter Kodiersignaturen ausgewählt ist;
(b) die kodierten Sammlungen in der Gruppe summiert werden, indem alle Datensätze in jeder Sammlung, die einem einzelnen Empfänger entsprechen, oder einer einzelnen Quelle, wenn Empfängersammlungen verwendet werden, summiert werden und dies für jeden unterschiedlichen Empfänger oder jede unterschiedliche Quelle wiederholt wird, was zu einer simultanen kodierten Sammlung führt;
(c) ein physikalisches Eigenschaftenmodell der unterirdischen Region angenommen wird, wobei das angenommene Modell Werte von mindestens einer physikalischen Eigenschaft an Standorten in der unterirdischen Region bereitstellt;
(d) eine Aktualisierung des angenommenen physikalischen Eigenschaftenmodells berechnet wird, die mit der simultan kodierten Sammlung aus Schritt (b) besser konsistent ist, wobei die Berechnung eine oder mehrere vorwärtige oder rückwärtige Simulationsoperationen der kodierten simultanen Quelle beinhalten, welche das angenommene physikalische Eigenschaftenmodell und kodierte Quellsignaturen verwenden, die dieselben Kodierfunktionen verwenden, die zum Kodieren entsprechender Sammlungen von gemessenen Daten verwendet wurden, wobei eine ganze simultane kodierte Sammlung in einer einzigen Simulationsoperation simuliert wird;
(e) Schritt (d) in mindestens einer weiteren Iteration unter Verwendung des aktualisierten physikalischen Eigenschaftenmodells aus der vorhergehenden Iteration aus Schritt (d) als angenommenes Modell wiederholt wird, um ein weiter aktualisiertes physikalisches Eigenschaftenmodell der unterirdischen Region zu produzieren, das mit einer entsprechenden simultanen kodierten Sammlung gemessener Daten besser konsistent ist, wobei dieselben Kodiersignaturen für Quellsignaturen in der Simulation verwendet werden, wie sie zur Bildung der entsprechenden simultanen kodierten Sammlung von gemessenen Daten verwendet wurden; und
(f) das weiter aktualisierte physikalische Eigenschaftenmodell als das erste physikalische Eigenschaftenmodell genommen wird.

**12.** Verfahren nach Anspruch 1, bei dem die Inversion der simultanen kodierten Quellen und/oder Empfänger umfasst, dass:

(a) eine Gruppe von zwei oder mehr kodierten Sammlungen der gemessenen geophysikalischen Daten aus dem flachen Zeitfenster erhalten wird, wobei jede Sammlung einer einzelnen generalisierten Quelle oder einem einzelnen Empfänger zugeordnet ist, und wobei jede Sammlung mit einer unterschiedlichen Kodierfunktion kodiert ist, die aus einem Satz nichtäquivalenter Kodierfunktionen ausgewählt ist;
(b) die kodierten Sammlungen in der Gruppe summiert werden, indem alle Datensätze in jeder Sammlung, die einem einzelnen Empfänger entsprechen, oder einer einzelnen Quelle, wenn Empfängersammlungen verwendet werden, summiert werden und dies für jeden unterschiedlichen Empfänger oder jede unterschiedliche Quelle wiederholt wird, was zu einer simultanen kodierten Sammlung führt;
(c) ein physikalisches Eigenschaftenmodell der unterirdischen Region angenommen wird, wobei das Modell Werte von mindestens einer physikalischen Eigenschaft an Standorten in der unterirdischen Region bereitstellt;
(d) die Gruppe der zwei oder mehr kodierten Sammlungen invertiert wird, wobei eine kodierte Sammlung zur Zeit invertiert wird, alle Datenkurven in jeder kodierten Sammlung unter Verwendung des angenommenen physikalischen Eigenschaftenmodells als Initialmodell simultan invertiert werden und das Modell iterativ aktualisiert wird, um eine Kostenfunktion zu minimieren, die den Grad der fehlenden Übereinstimmung zwischen modellsimulierten Daten und den gemessenen geophysikalischen Daten in den kodierten Sammlungen misst, um ein aktualisiertes physikalisches Eigenschaftsmodell zu generieren, wobei Modellanpassungen unter Verwendung eines Gradienten der Kostenfunktion in Bezug auf mindestens einen Modellparameter vorgenommen werden, wobei der Gradient aus einer Zeitintegration eines Produkts von kodierten simultanen Quelldaten, die zeitlich vorwärts simuliert werden, und kodierten simultanen Quelldaten, die zeitlich rückwärts simuliert werden, berechnet wird; und

(e) das aktualisierte physikalische Eigenschaftenmodell als das erste physikalische Eigenschaftenmodell genommen wird.

13. Verfahren nach Anspruch 11, das ferner Erhalten von mindestens einer zusätzlichen Gruppe von zwei oder mehr kodierten Sammlungen der gemessenen geophysikalischen Daten wie in Schritt (a) und Durchführen von Schritt (b) für jede zusätzliche Gruppe, dann Akkumulieren der entsprechenden Aktualisierungen des physikalischen Eigenschaftsmodells aus Schritt (d) umfasst, wobei das in Schritt (e) zu verwendende aktualisierte physikalische Eigenschaftsmodell auf den akkumulierten Aktualisierungen basiert.

14. Verfahren nach Anspruch 11 oder 12, bei dem die kodierten Sammlungen gemessener Daten durch zeitliches Falten aller Kurven aus der Sammlung mit der für die Sammlung ausgewählten Kodiersignatur kodiert werden.

15. Verfahren nach Anspruch 11 oder 12, bei dem die zwei oder mehr kodierten Sammlungen von gemessenen Daten erhalten werden, indem Sammlungen von Daten aus einer geophysikalischen Vermessung erhalten werden, in der Daten von einer Vielzahl simultan operierender, eindeutig kodierter Quellvorrichtungen erfasst werden.

16. Computerprogrammprodukt, das ein nicht-flüchtiges computernutzbares Medium mit einem darauf verkörperten computerlesbaren Programmcode umfasst, wobei der computerlesbare Programmcode vorgesehen ist, um zur Implementierung eines Verfahrens zur Full-Wavefield-Inversion von gemessenen geophysikalischen Daten ausgeführt zu werden, um ein physikalisches Eigenschaftsmodell für eine unterirdische Region zu ermitteln, wobei in dem Verfahren:

ein ausgewähltes flaches Zeitfenster der Eingänge aus den gemessenen geophysikalischen Daten durch Inversion von simultanen kodierten Quellen und/oder Empfängern invertiert wird, um ein erstes physikalisches Eigenschaftsmodell für die unterirdische Region zu erhalten;

die gemessenen geophysikalischen Daten oder ein ausgewähltes tiefes Zeitfenster der Eingänge aus den gemessenen geophysikalischen Daten durch iterative sequentielle Quelleninversion invertiert werden, um ein zweites physikalisches Eigenschaftsmodell für die unterirdische Region zu erhalten, wobei das erste physikalische Eigenschaftsmodell als Startmodell verwendet wird und ein Satz von Quellstandorten verwendet wird, um das zweite physikalische Eigenschaftsmodell in der iterativen sequentiellen Quelleninversion zu aktualisieren; und

das zweite physikalische Eigenschaftsmodell der unterirdischen Region ausgegeben, angezeigt oder im Datenspeicher gespeichert wird.

17. Computerprogrammprodukt, das ein nicht-flüchtiges computernutzbares Medium mit einem darauf verkörperten computerlesbaren Programmcode umfasst, wobei der computerlesbare Programmcode vorgesehen ist, um zur Implementierung eines Verfahrens zur Full-Wavefield-Inversion von gemessenen geophysikalischen Daten ausgeführt zu werden, um ein physikalisches Eigenschaftsmodell für eine unterirdische Region zu ermitteln, wobei in dem Verfahren:

ein ausgewähltes flaches Zeitfenster der Eingänge aus den gemessenen geophysikalischen Daten durch Inversion von simultanen kodierten Quellen und/oder Empfängern invertiert wird, um ein erstes physikalisches Eigenschaftsmodell für die unterirdische Region zu erhalten;

das erste physikalische Eigenschaftsmodell verwendet wird, um synthetische Daten für längere Versätze zu simulieren, die Eingängen aus tieferen als dem flachen Zeitfenster entsprechen;

die gemessenen geophysikalischen Daten invertiert werden, wobei die Daten mit längeren Versätzen erweitert werden, wobei die Inversion eine Inversion mit simultanen kodierten Quellen und/oder kodierten Empfängern ist, um ein zweites physikalisches Eigenschaftsmodell der unterirdischen Region zu erhalten, wobei die erweiterten Daten mit längeren Versätzen die Summe der synthetischen Daten für längere Versätze und der gemessenen Daten bei den längeren Versätzen ist; und

das zweite physikalische Eigenschaftenmodell der unterirdischen Region ausgegeben, angezeigt oder im Datenspeicher gespeichert wird.

18. Verfahren zur Gewinnung von Kohlenwasserstoffen aus einer unterirdischen Region, bei dem

eine geophysikalische Vermessung der unterirdischen Region durchgeführt wird, die zu gemessenen geophysikalischen Daten führt;

die gemessenen geophysikalischen Daten auf einem Computer nach einem Verfahren gemäß Anspruch 1 oder Anspruch 2 verarbeitet werden, um ein physikalisches Eigenschaftenmodell der unterirdischen Region zu generieren;

das Kohlenwasserstoffpotential der unterirdischen Region unter Verwendung des physikalischen Eigenschaftenmodells bewertet wird; und

mindestens teilweise basierend auf der Bewertung des Kohlenwasserstoffpotentials eine Bohrung in die unterirdische Formation gebohrt wird und Kohlenwasserstoffe aus der Bohrung gewonnen werden.

## Revendications

1. Procédé mis en oeuvre sur ordinateur d'inversion de forme d'onde complète de données géophysiques mesurées (200) afin de déterminer un modèle de propriétés physiques pour une région de subsurface, comprenant :

l'utilisation d'un ordinateur pour inverser (205) une fenêtre temporelle peu profonde sélectionnée d'arrivées à partir des données géophysiques mesurées (202) par inversion simultanée de sources et/ou de récepteurs codés (203) afin d'obtenir un premier modèle de propriétés physiques (206) pour la région de subsurface ;

l'utilisation d'un ordinateur pour inverser (209) les données géophysiques mesurées, ou une fenêtre temporelle profonde sélectionnée d'arrivées à partir des données géophysiques mesurées (208), par inversion séquentielle itérative de sources afin d'obtenir un deuxième modèle de propriétés physiques (210) pour la région de subsurface, dans lequel le premier modèle de propriétés physiques est utilisé en tant que modèle de départ (207) et un ensemble d'emplacements de source est utilisé pour mettre à jour le deuxième modèle de propriétés physiques lors de l'inversion séquentielle itérative de sources ; et

la fourniture en sortie, l'affichage, ou la sauvegarde, dans une unité de stockage de données, du deuxième modèle de propriétés physiques de la région de subsurface.

2. Procédé mis en oeuvre sur ordinateur d'inversion de forme d'onde complète de données géophysiques mesurées (200) afin de déterminer un modèle de propriétés physiques pour une région de subsurface, comprenant :

l'utilisation d'un ordinateur pour inverser (205) une fenêtre temporelle peu profonde sélectionnée d'arrivées à partir des données géophysiques mesurées (202) par inversion simultanée de sources et/ou de récepteurs codés (203) afin d'obtenir un premier modèle de propriétés physiques (206) pour la région de subsurface ;

l'utilisation du premier modèle de propriétés physiques pour simuler, à l'aide d'un ordinateur, des données synthétiques pour des décalages plus longs correspondant à des arrivées provenant de plus grandes profondeurs que ladite fenêtre temporelle peu profonde (211) ;

l'utilisation d'un ordinateur pour inverser (214) les données géophysiques mesurées, dans lequel les données ayant des décalages plus longs sont augmentées, ladite inversion étant une inversion (213) simultanée de sources codées et/ou de récepteurs codés, afin d'obtenir un deuxième modèle de propriétés physiques (210) de la région de subsurface, dans lequel lesdites données augmentées présentant des décalages plus longs sont la somme des données synthétiques correspondant à des décalages plus longs et des données mesurées situées aux décalages plus longs ; et

la fourniture en sortie, l'affichage, ou la sauvegarde, dans une unité de stockage de données, du deuxième modèle de propriétés physiques de la région de subsurface.

3. Procédé selon la revendication 1, dans lequel la fenêtre temporelle peu profonde est constituée de temps d'arrivée plus faibles que des temps d'arrivée correspondant à des modes de propagation les plus rapides aux décalages les plus longs, dans lequel le décalage est un espacement entre source et récepteur.

4. Procédé selon la revendication 1, dans lequel le nombre d'emplacements de sources qui est utilisé pour mettre à jour le deuxième modèle de propriétés physiques lors de l'inversion séquentielle itérative de sources est déterminé sur la base au moins en partie d'une longueur d'onde spatiale du deuxième modèle de propriétés physiques et des décalages disponibles maximaux dans les données géophysiques mesurées.

5. Procédé selon la revendication 1, dans lequel l'ensemble d'emplacements de sources utilisés pour mettre à jour le deuxième modèle de propriétés physiques lors de l'inversion séquentielle itérative de sources est constitué d'un plus faible nombre d'emplacements de sources que ceux qui sont représentés dans les données géophysiques mesurées ou sont utilisés lors de l'inversion de sources et/ou de récepteurs codés.

6. Procédé selon la revendication 1, dans lequel :

des données manquantes pour des décalages négatifs dans la fenêtre temporelle peu profonde sélectionnée d'arrivées sont remplacées par des données à décalage positif en utilisant la réciprocité source-récepteur ; et des données manquantes de décalage proche dans la fenêtre temporelle peu profonde sélectionnée d'arrivées comprennent des valeurs estimées ou, en variante, des récepteurs qui correspondaient à un décalage proche pour une certaine source tirée ne sont pas pris en compte dans le procédé.

7. Procédé selon la revendication 1 ou 2, dans lequel les données géophysiques mesurées ont été acquises lors d'un levé effectué à l'aide de récepteurs non stationnaires.

8. Procédé selon la revendication 1, comprenant en outre l'utilisation d'une inversion itérative lors de l'inversion simultanée de sources et/ou de récepteurs codés, dans lequel les sources et/ou les récepteurs sont codés à l'aide d'un ensemble sélectionné de fonctions de codage, et dans lequel un ensemble différent de fonctions de codage est sélectionné pour au moins l'une des itérations.

9. Procédé selon la revendication 2, dans lequel :

toutes les inversions simultanées de sources codées sont itératives, les sources sont codées à l'aide d'un ensemble sélectionné de fonctions de codage, et un ensemble différent de fonctions de codage est sélectionné pour au moins l'une des itérations.

10. Procédé selon la revendication 1, dans lequel les données géophysiques mesurées sont des données sismiques.

11. Procédé selon la revendication 1, dans lequel l'inversion simultanée de sources et/ou de récepteurs codés comprend :

(a) l'obtention d'un groupe de deux rassemblements codés ou plus des données géophysiques mesurées pour la fenêtre temporelle peu profonde, dans lequel chaque rassemblement est associé à une seule source généralisée ou à un seul récepteur, et dans lequel chaque rassemblement est codé avec une signature de codage différente sélectionnée dans un ensemble de signatures de codage non équivalentes ;
(b) la sommation des rassemblements codés dans le groupe par la sommation de tous les enregistrements de données dans chaque rassemblement qui correspondent à un seul récepteur, ou pour une seule source si des rassemblements de récepteurs sont utilisés, et la répétition, pour chaque récepteur différent ou source différente, aboutissant à un rassemblement codé simultané ;
(c) l'adoption d'un modèle de propriétés physiques de la région de subsurface, ledit modèle adopté fournissant des valeurs d'au moins une propriété physique à certains emplacements dans la région de subsurface ;
(d) le calcul d'une mise à jour du modèle de propriétés physiques adopté qui présente une meilleure cohérence avec le rassemblement codé simultané provenant de l'étape (b), ledit calcul mettant en jeu une ou plusieurs opérations de simulation vers l'avant ou vers l'arrière de sources simultanées codées qui utilisent le modèle de propriétés physiques adopté et des signatures de sources codées utilisant les mêmes fonctions de codage que celles utilisées pour coder des rassemblements correspondants de données mesurées, dans lequel la totalité d'un rassemblement codé simultané est simulée en une seule opération de simulation ;
(e) la répétition de l'étape (d) sur au moins une itération supplémentaire, en utilisant le modèle de propriétés physiques mis à jour provenant de l'itération précédente de l'étape (d) en tant que modèle adopté afin de produire un autre modèle de propriétés physiques mis à jour de la région de subsurface qui présente une meilleure cohérence avec une rassemblement codé simultané correspondant de données mesurées, en utilisant les mêmes signatures de codage pour les signatures de sources lors de la simulation que celles qui ont été utilisées lors de la formation du rassemblement codé simultané correspondant de données mesurées ; et
(f) l'utilisation de l'autre modèle de propriétés physiques mis à jour pour le premier modèle de propriétés physiques.

**12.** Procédé selon la revendication 1, dans lequel l'inversion simultanée de sources et/ou de récepteurs codés comprend :

(a) l'obtention d'un groupe de deux rassemblements codés ou plus des données géophysiques mesurées à partir de la fenêtre temporelle peu profonde, dans lequel chaque rassemblement est associé à une seule source généralisée ou à un seul récepteur, et dans lequel chaque rassemblement est codé avec une fonction de codage différente sélectionnée dans un ensemble de fonctions de codage non équivalentes ;

(b) la sommation des rassemblements codés dans le groupe par la sommation de tous les enregistrements dans données de chaque rassemblement qui correspondent à un seul récepteur, ou à une seule source si des rassemblements de récepteurs sont utilisés, et la répétition, pour chaque récepteur différent ou source différente, aboutissant à un rassemblement codé simultané ;

(c) l'adoption d'un modèle de propriétés physiques de la région de subsurface, ledit modèle fournissant des valeurs d'au moins une propriété physique à certains emplacements dans la région de subsurface ;

(d) l'inversion du groupe de deux rassemblements codés ou plus, à raison d'un rassemblement codé à la fois, toutes les traces de données de chaque rassemblement codé étant inversées simultanément, en utilisant le modèle de propriétés physiques adopté en tant que modèle initial et la mise à jour itérative dudit modèle afin de minimiser une fonction de coût mesurant un degré de désaccord entre des données simulées par modèle et les données géophysiques mesurées dans les rassemblements codés afin de générer un modèle de propriétés physiques mis à jour, dans lequel des ajustements du modèle sont réalisés à l'aide d'un gradient de la fonction de coût par rapport à au moins un paramètre de modèle, lequel gradient est calculé à partir d'une intégration temporelle d'un produit de données de sources simultanées codées simulées en l'avant dans le temps et de données de sources simultanées codées simulées en arrière dans le temps ; et

(e) l'utilisation du modèle de propriétés physiques mis à jour en tant que premier modèle de propriétés physiques.

**13.** Procédé selon la revendication 11, comprenant en outre l'obtention d'au moins un groupe supplémentaire de deux rassemblements codés ou plus des données géophysiques mesurées comme indiqué à l'étape (a), et l'exécution de l'étape (b) pour chaque groupe supplémentaire, puis l'accumulation des mises à jour correspondantes dans le modèle de propriétés physiques résultant de l'étape (d), dans lequel le modèle de propriétés physiques mis à jour devant être utilisé lors de l'étape (e) est fondé sur les mises à jour accumulées.

**14.** Procédé selon la revendication 11 ou 12, dans lequel lesdits rassemblements codés de données mesurées sont codés par convolution temporelle de toutes les traces provenant d'un certain rassemblement présentant la signature de codage sélectionnée pour le rassemblement.

**15.** Procédé selon la revendication 11 ou 12, dans lequel les deux rassemblements codés ou plus de données mesurées sont obtenus par obtention de rassemblements de données provenant d'un levé géophysique dans lequel des données sont acquises à partir d'une pluralité de dispositifs sources codés de manière unique et fonctionnant simultanément.

**16.** Produit de programme d'ordinateur, comprenant un support non transitoire utilisable sur ordinateur sur lequel est stocké un code de programme lisible par ordinateur, ledit code de programme lisible par ordinateur pouvant être exécuté pour mettre en oeuvre un procédé d'inversion de forme d'onde complète de données géophysiques mesurées, afin de déterminer un modèle de propriétés physiques d'une région de subsurface, ledit procédé comprenant :

l'inversion d'une fenêtre temporelle peu profonde sélectionnée d'arrivées à partir des données géophysiques mesurées par inversion simultanée de sources et/ou de récepteurs codés afin d'obtenir un premier modèle de propriétés physiques pour la région de subsurface ;

l'inversion des données géophysiques mesurées, ou d'une fenêtre temporelle profonde sélectionnée d'arrivées à partir des données géophysiques mesurées, par inversion séquentielle itérative de sources afin d'obtenir un deuxième modèle de propriétés physiques pour la région de subsurface, dans lequel le premier modèle de propriétés physiques est utilisé en tant que modèle de départ et un ensemble d'emplacements de sources est utilisé pour mettre à jour le deuxième modèle de propriétés physiques lors de l'inversion séquentielle itérative de sources ; et

la fourniture en sortie, l'affichage ou la sauvegarde, dans une unité de stockage de données, du deuxième modèle de propriétés physiques de la région de subsurface.

**17.** Produit de programme d'ordinateur, comprenant un support non transitoire utilisable sur ordinateur sur lequel est stocké un code de programme lisible par ordinateur, ledit code de programme lisible par ordinateur pouvant être exécuté pour mettre en oeuvre un procédé d'inversion de forme d'onde complète de données géophysiques mesurées, afin de déterminer un modèle de propriétés physiques pour une région de subsurface, ledit procédé comprenant :

l'inversion d'une fenêtre temporelle peu profonde sélectionnée d'arrivées à partir des données géophysiques mesurées par inversion simultanée de sources et/ou de récepteurs codés afin d'obtenir un premier modèle de propriétés physiques pour la région de subsurface ;

l'utilisation du premier modèle de propriétés physiques pour simuler des données synthétiques pour des décalages plus longs correspondant à des arrivées provenant de plus grandes profondeurs que ladite fenêtre temporelle peu profonde ;

l'inversion des données géophysiques mesurées, dans lequel les données ayant des décalages plus longs sont augmentées, ladite inversion étant une inversion simultanée de sources codées et/ou de récepteurs codés, afin d'obtenir un deuxième modèle de propriétés physiques de la région de subsurface, dans lequel lesdites données augmentées présentant des décalages plus longs sont la somme des données synthétiques correspondant à des décalages plus longs et des données mesurées situées aux décalages plus longs ; et

la fourniture en sortie, l'affichage, ou la sauvegarde, dans une unité de stockage de données, du deuxième modèle de propriétés physiques de la région de subsurface.

**18.** Procédé de production d'hydrocarbures à partir d'une région de subsurface, comprenant :

l'exécution d'un levé géophysique de la région de subsurface afin d'obtenir des données géophysiques mesurées ;

le traitement des données géophysiques mesurées sur un ordinateur conformément à un procédé selon la revendication 1 ou la revendication 2 afin de générer un modèle de propriétés physiques de la région de subsurface ;

l'évaluation du potentiel en hydrocarbures de la région de subsurface à l'aide du modèle de propriétés physiques ; et

le forage d'un puits dans la région de subsurface sur la base au moins en partie de l'évaluation du potentiel en hydrocarbures, et la production d'hydrocarbures à partir du puits.

Faster

100

101

Slower

*FIG. 1*

FIG. 2

**FIG. 3**

**FIG. 4**

**FIG. 5**

**FIG. 6**

**FIG. 7**

**FIG. 8**

EP 2 622 378 B1

FIG. 9

FIG. 10

27

**FIG. 11**

**FIG. 12**

**FIG. 13**

**FIG. 14**

**FIG. 15**

**FIG. 16**

**FIG. 17**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008042081 A, Krebs
- WO 2009117174 A
- WO 08042081 A
- US 6876928 B
- US 6021094 A
- US 6327537 B

### Non-patent literature cited in the description

- **TARANTOLA, A.** Inversion of seismic reflection data in the acoustic approximation. *Geophysics,* 1984, vol. 49, 1259-1266
- **SIRGUE, L. ; PRATT G.** Efficient waveform inversion and imaging: A strategy for selecting temporal frequencies. *Geophysics,* 2004, vol. 69, 231-248
- **FALLAT, M. R. ; DOSSO, S. E.** Geoacoustic inversion via local, global, and hybrid algorithms. *Journal of the Acoustical Society of America,* 1999, vol. 105, 3219-3230
- **VAN MANEN, D. J. ; ROBERTSSON, J.O.A. ; CURTIS, A.** Making wave by time reversal. *SEG International Exposition and 75th Annual Meeting Expanded Abstracts,* 2005, 1763-1766
- **BERKHOUT, A. J.** Areal shot record technology. *Journal of Seismic Exploration,* 1992, vol. 1, 251-264
- **ZHANG, Y. ; SUN, J. ; NOTFORS, C. ; GRAY, S. H. ; CHERRIS, L. ; YOUNG, J.** Delayed-shot 3D depth migration. *Geophysics,* 2005, vol. 70, E21-E28
- **MORA, P.** Nonlinear two-dimensional elastic inversion of multi-offset seismic data. *Geophysics,* 1987, vol. 52, 1211-1228
- **ROMERO, L. A. ; GHIGLIA, D. C. ; OBER, C. C. ; MORTON, S. A.** Phase encoding of shot records in prestack migration. *Geophysics,* 2000, vol. 65, 426-436
- **JING X. ; FINN, C. J. ; DICKENS, T. A. ; WILLEN, D. E.** Encoding multiple shot gathers in prestack migration. *SEG International Exposition and 70th Annual Meeting Expanded Abstracts,* 2000, 786-789
- **HABER, E. ; CHUNG M. ; HERRMANN.** An effective method for parameter estimation with PDE constraints with multiple right hand sides. *Preprint - UBC,* 2010, http://www.math.ubc.ca/~haber/pubs/PdeOptStochV5.pdf
- **JEROME R. KREBS ; JOHN E. ANDERSON ; DAVID HINKLEY ; RAMESH NEELAMANI ; SUNWOONG LEE ; ANATOLY BAUMSTEIN ; MARTIN-DANIEL LACASSE.** Full-wavefield seismic inversion using encoded sources. *Geophysics,* 2009, vol. 74-6, WCC177-WCC188